# EUROPÄISCHE PATENTSCHRIFT

(11) **EP 3 069 038 B1**
(45) Veröffentlichungstag und Bekanntmachung des Hinweises auf die Patenterteilung: **13.12.2017**
(21) Anmeldenummer: 14798687.1
(22) Anmeldetag: 20.10.2014
(51) Int. Cl.: F16D 23/12, H02K 49/00

(54) **KUPPLUNGSAGGREGAT ZUM KOPPELN EINES VERBRENNUNGSMOTORS AN EINEN ANTRIEBSSTRANG EINES KRAFTFAHRZEUGS SOWIE VERFAHREN ZUM DÄMPFEN VON DREHSCHWINGUNGEN IN EINEM ANTRIEBSSTRANG EINES KRAFTFAHRZEUGS**
CLUTCH ASSEMBLY FOR COUPLING AN INTERNAL COMBUSTION ENGINE TO A DRIVE TRAIN OF A MOTOR VEHICLE AND METHOD FOR DAMPENING TORSIONAL VIBRATIONS IN A DRIVE TRAIN OF A MOTOR VEHICLE
ORGANE D'EMBRAYAGE DESTINÉ À COUPLER UN MOTEUR À COMBUSTION INTERNE AVEC UNE CHAÎNE CINÉMATIQUE D'UN VÉHICULE À MOTEUR, ET PROCÉDÉ POUR AMORTIR DES VIBRATIONS DE TORSION DANS LA CHAÎNE CINÉMATIQUE D'UN VÉHICULE À MOTEUR

(30) Priorität: 13.11.2013 DE 102013223044; 28.03.2014 DE 102014205847
(43) Veröffentlichungstag der Anmeldung: 21.09.2016
(73) Patentinhaber: Schaeffler Technologies AG & Co. KG, 91074 Herzogenaurach (DE)
(72) Erfinder: HELMER, Daniel, 77883 Ottenhöfen (DE); FINKENZELLER, Marc, 77723 Gengenbach (DE)
(86) Internationale Anmeldenummer: PCT/DE2014/200566
(87) Internationale Veröffentlichungsnummer: WO 2015/070851

(56) Entgegenhaltungen:
- WO-A1-2007/098521
- DE-A1-102012 222 110
- JP-A- 2010 163 050
- US-A1- 2005 040 000

## Beschreibung

Die Erfindung betrifft ein Kupplungsaggregat zum Koppeln eines Verbrennungsmotors an einen Antriebsstrang eines Kraftfahrzeugs, mit dessen Hilfe ein Drehmoment wahlweise zwischen dem Verbrennungsmotor und dem Antriebsstrang des Kraftfahrzeugs ausgetauscht werden kann, gemäß dem Oberbegriff des Anspruchs 1. Die Erfindung betrifft ferner ein Verfahren, mit dessen Hilfe Drehschwingungen in einem Antriebsstrang eines Kraftfahrzeugs gedämpft werden können, gemäß dem Oberbegriff des Anspruchs 8.

Aus der den Oberbegriff der Ansprüche 1 und 8 bildenden DE 10 2012 222 110 A1 ist ein Kupplungsaggregat bekannt, bei dem eine Antriebswelle eines Verbrennungsmotors über einen Freilauf mit einem Rampensystem einer Betätigungseinrichtung zum Öffnen und Schließen einer Lamellenkupplung gekoppelt ist. Die Lamellenkupplung kann im geschlossenen Zustand die Antriebswelle des Verbrennungsmotors mit einer Ausgangswelle koppeln und dadurch an den Antriebsstrang des Kraftfahrzeugs ankuppeln. Das Kupplungsaggregat weist eine in einem Rotor einer elektrischen Maschine integrierte Wirbelstrombremse auf, mit deren Hilfe die Lamellenkupplung über das Rampensystem ebenfalls geschlossen werden kann, um entgegen der Freilaufrichtung des Freilaufs ein Drehmoment aus dem Antriebsstrang in den Verbrennungsmotor einzuleiten, um den Verbrennungsmotor starten zu können.

Es besteht ein ständiges Bedürfnis Drehschwingungen in einem Antriebsstrang eines Kraftfahrzeugs energieeffizient zu reduzieren.

Es ist die Aufgabe der Erfindung Maßnahmen aufzuzeigen, die eine zumindest teilweise Dämpfung von Drehschwindungen in einem Antriebsstrang eines Kraftfahrzeugs energieeffizient ermöglichen.

Die Lösung der Aufgabe erfolgt erfindungsgemäß durch ein Kupplungsaggregat mit den Merkmalen des Anspruchs 1 sowie ein Verfahren mit den Merkmalen des Anspruchs 8. Bevorzugte Ausgestaltungen der Erfindung sind in den Unteransprüchen angegeben, die jeweils einzeln oder in Kombination einen Aspekt der Erfindung darstellen können.

Erfindungsgemäß ist ein Kupplungsaggregat zum Koppeln eines Verbrennungsmotors an einen Antriebsstrang eines Kraftfahrzeugs vorgesehen mit einer Reibungskupplung zum Koppeln einer Antriebswelle des Verbrennungsmotors mit einer Ausgangswelle, einer Betätigungseinrichtung zum Öffnen und/oder Schließen der Reibungskupplung, einer Wirbelstrombremse zum Einleiten einer Betätigungskraft in die Betätigungseinrichtung und einer Steuereinrichtung zum Bestromen der Wirbelstrombremse mit einem definiert vorgegebenen Strom, wobei die Steuereinrichtung hergerichtet ist in einer Beschleunigungsphase einer Drehschwingung der Antriebswelle einen Strom zum Öffnen, insbesondere zum Einstellen eines Schlupfbetriebs, der Reibungskupplung und in einer Verzögerungsphase der Drehschwingung der Antriebswelle einen Strom zum Schließen, insbesondere zum drehfesten reibschlüssigen Koppeln, der Reibungskupplung für die Wirbelstrombremse vorzugeben.

Wenn der Verbrennungsmotor ein Drehmoment erzeugt und über die Antriebswelle in das Kupplungsaggregat einleitet, entstehen durch die Wandlung der translatorischen Bewegung eines Kolbens in einem Zylinder in eine rotatorische Bewegung mit Hilfe eines an einer Kurbelwelle und an dem Kolben angreifenden Pleuels Drehschwingungen, die ein ganzzahliges Vielfaches der Nenndrehzahl des Verbrennungsmotors sind ("Motorordnungen") und sich in dem Antriebsstrang fortpflanzen können. Durch die Drehschwingungen kann sich die Drehzahl und das Drehmoment der Antriebswelle periodisch, insbesondere sinusförmig, erhöhen ("Beschleunigungsphase") und verringern ("Verzögerungsphase"). Dadurch, dass in einem Betriebszustand in dem der Verbrennungsmotor an dem Antriebsstrang angekoppelt ist, die Reibungskupplung mit Hilfe der Wirbelstrombremse zumindest teilweise und/oder zeitweise geöffnet werden kann, wenn sich die Drehschwingung in ihrer Beschleunigungsphase befindet, kann eine unnötige Beschleunigung des Antriebsstrangs vermieden werden, so dass an der Ausgangswelle die Drehschwingung zumindest teilweise gedämpft ist. Zusätzlich oder alternativ kann die Reibungskupplung in der Verzögerungsphase mit Hilfe einer von der Wirbelstrombremse aufgebrachten Betätigungskraft geschlossen werden, so dass hierzu nicht das von der Antriebswelle bereitgestellte Drehmoment genutzt werden muss. Dadurch kann auch in der Verzögerungsphase der Drehschwingung ein unnötiges Verzögern des Antriebsstrangs vermieden werden, so dass an der Ausgangswelle die Drehschwingung zumindest teilweise gedämpft ist. Hierzu ist es lediglich erforderlich die Wirbelstrombremse geeignet zu bestromen, wobei die hierfür erforderliche elektrische Energie insbesondere von einer elektrischen Maschine zum Antrieb des Kraftfahrzeugs und/oder einer wiederaufladbaren Batterie, insbesondere Traktionsbatterie, bereitgestellt werden kann. Insbesondere ist es hierbei nicht erforderlich rotierende Massen der elektrischen Maschine geeignet zu beschleunigen und zu verzögern, um die Drehschwingungen aktiv dämpfen zu können. Stattdessen ist es lediglich erforderlich Teile der Betätigungseinrichtung zu bewegen, die im Vergleich zu der elektrischen Maschine erheblich geringere zu bewegende träge Massen aufweisen. Das aktive Dämpfen von Drehschwingungen des Verbrennungsmotors kann dadurch mit einem entsprechend geringeren Energieeinsatz erfolgen. Durch die Änderung des Betriebszustands der Reibungskupplung mit Hilfe der Wirbelstrombremse sind nur geringe träge Massen der Betätigungseinrichtung mit einem entsprechend geringen Energieeinsatz zu bewegen, um eine aktive Dämpfung von Drehschwingungen zu erreichen, so dass eine zumindest teilweise Dämpfung von Drehschwindungen in einem Antriebsstrang eines Kraftfahrzeugs energieeffizient ermöglicht ist.

Im einem vollständig geschlossenen Betriebszustand der Reibungskupplung ist eine drehfeste Koppelung ohne signifikantem Schlupf mit Haftreibung gegeben. In einem teilweise geöffneten Betriebszustand der Reibungskupplung befindet sich die Reibungskupplung im Schlupfbetrieb, so dass eine Eingangsseite der Reibungskupplung zu einer Ausgangsseite der Reibungskupplung mit einer Differenzdrehzahl rotieren kann und allenfalls eine Gleitreibung zwischen der Eingangsseite und der Ausgangsseite vorliegt. In einem vollständig geöffneten Betriebszustand der Reibungskupplung ist die Eingangsseite der Reibungskupplung zur Ausgangsseite der Reibungskupplung beabstandet, so dass kein Reibkontakt zwischen der Eingangsseite und der Ausgangsseite vorliegt. Das Kraftfahrzeug ist insbesondere als Hybrid-Kraftfahrzeug mit einer elektrischen Maschine und/oder einer Traktionsbatterie zum rein elektrischen Antrieb des Kraftfahrzeugs ausgestaltet. Die Wirbelstrombremse kann mit der elektrischen Maschine und/oder mit der Traktionsbatterie zum Austausch elektrischer Energie gekoppelt sein. Die Steuereinrichtung kann insbesondere in Abhängigkeit von der Frequenz, der Phase und/oder der Amplitude der Drehschwingung den Verlauf der Stromstärke und/oder der Spannung des an der Wirbelstrombremse angelegten Stroms geeignet einstellen, um die jeweilige Drehschwingung zu dämpfen. Insbesondere kann auch eine Überlagerung von mehreren Drehschwingungen von der Steuereinrichtung entsprechend berücksichtigt werden, so dass beispielsweise mehrere Motorordnungen gleichzeitig gedämpft werden können. Ferner kann durch die Dämpfung mit Hilfe der Wirbelstrombremse und der entsprechende oszillierend betätigten Reibungskupplung bereits ein Dämpfungsausmaß erreicht werden, indem beispielsweise die Amplituden der Drehschwingungen signifikant reduziert wurden, dass ein im Drehmomentfluss im Zugbetrieb des Verbrennungsmotors nachgelagerte und/oder vorgelagerte Drehschwingungsdämpfer, insbesondere ein Zweimassenschwungrad, entsprechend einfacher aufgebaut sein kann.

Die Betätigungseinrichtung weist insbesondere ein Rampensystem auf, bei dem eine Eingangsrampe zu einer Ausgangsrampe gegebenenfalls über zwischengeschaltete Lagerelemente, insbesondere Lagerkugeln, relativ zueinander verdreht werden kann, um die axiale Erstreckung des Rampensystems zu ändern. Zur Betätigung der Betätigungseinrichtung kann die vorzugsweise in axialer Richtung feststehende Eingangsrampe des Rampensystems relativ zur insbesondere in Umfangsrichtung drehfesten Ausgangsrampe verdreht werden. Hierzu kann ein entsprechendes Drehmoment in das Rampensystem eingeleitet werden. Beispielsweise kann mit Hilfe der Wirbelstrombremse ein von einer elektrischen Maschine eines Hybrid- Kraftfahrzeug erzeugtes Drehmoment eingeleitet werden. Das eingeleitete Drehmoment kann unmittelbar auf die Eingangsrampe einwirken oder mittelbar, insbesondere nach einer Drehmomentwandlung, beispielsweise mit Hilfe eines Planetengetriebes, an die Eingangsrampe übertragen werden. Das Rampensystem kann als Betätigungselement zum Schließen und/oder Öffnen der Reibungskupplung ausgestaltet sein, wobei insbesondere die von der Eingangsrampe weg weisende Rückseite der Ausgangsrampe als Anpressfläche an einem Reibbelag der Reibungskupplung angreifen kann. Die Ausgangsrampe kann dadurch bereits eine Anpressplatte und/oder Stahllamelle der Reibungskupplung ausbilden. Die Reibungskupplung ist insbesondere als nasse oder trockene Lamellenkupplung mit mehreren hintereinander vorgesehenen Reibpaarungen zwischen einem Eingangsteil und einem Ausgangsteil ausgestaltet. Vorzugsweise kann mit Hilfe eines Kühlmittels, insbesondere Öl, Reibungswärme aus der Reibungskupplung abgeführt werden, so dass die Reibungskupplung insbesondere als nasse Lamellenkupplung ausgestaltet sein kann. Die Reibungskupplung kann insbesondere ein Eingangsteil und/oder ein Ausgangsteil aufweisen, das einen Lamellenträger aufweist, an dem in axialer Richtung verschiebbare Lamellen geführt sind. Die jeweilige Lamelle kann mit Reibbelägen versehen sein oder als Stahllamelle ausgeführt sein. Die Reibungskupplung kann in der Ausgangslage, wenn über das Betätigungselement keine Betätigungskraft eingeleitet wird, geöffnet ("normally open) oder geschlossen ("normally closed") sein.

Das Rampensystem kann dadurch insbesondere zur Betätigung der Reibungskupplung des des Kupplungsaggregats verwendet werden, mit dessen Hilfe ein Verbrennungsmotor an den Antriebsstrang eines Hybrid-Fahrzeugs angekuppelt werden kann. Bei einer derartigen auch als "E-Clutch" bezeichneten Reibungskupplung kann es sich um eine rotorintegrierte Kupplung handeln, welche den Verbrennungsmotor mit einer elektrischen Maschine sowie dem Antriebstrang verbindet. Die E-Clutch kann hierbei mit dem Rotor der elektrischen Maschine mitrotieren und/oder den Verbrennungsmotor mit dem Rotor der elektrischen Maschine kuppeln.

Zum Starten des Verbrennungsmotors kann die elektrische Maschine eingesetzt werden. Wird bereits elektrisch gefahren, so kann die elektrische Maschine zum Zeitpunkt des Motorstarts des Verbrennungsmotors das aktuell bereitgestellte Moment um das Startmoment des Verbrennungsmotors erhöhen, wobei gleichzeitig die E-Clutch geschlossen werden kann. Dadurch kann ein Drehmomentfluss von der elektrischen Maschine zum Verbrennungsmotor erfolgen, um den Verbrennungsmotor zu starten. Hierbei kann insbesondere das übertragbare Moment der E-Clutch sehr genau auf das Startmoment eingestellt werden, damit am Kraftfahrzeug keine unerwünschte Längsbeschleunigung auftritt.

Insbesondere ist eine mit der Steuereinrichtung gekoppelte Detektionseinrichtung zur Detektion von Drehschwingungen der Antriebswelle vorgesehen. Der Verlauf der Drehzahl und/oder des Drehmoments der Antriebswelle kann von der Detektionseinrichtung gemessen werden. Hierzu kann beispielsweise der Verlauf der Drehzahl der Antriebswelle mit Hilfe mindestens eines Drehzahlsensors gemessen werden. Der Verlauf der Drehzahl kann analysiert werden und mindestens eine Drehschwingung identifiziert werden, die um einen der Nenndrehzahl der Antriebswelle entsprechenden Mittelwert, insbesondere periodisch, vorzugsweise sinusförmig, schwankt. Die Detektionseinrichtung kann insbesondere die Frequenz der Drehschwingung und/oder die Phase der Drehschwingung und/oder die Amplitude der Drehschwingung ermitteln. Auf Grundlage dieser Informationen über die Drehschwingung kann die Frequenz, die Phase und/oder die Amplitude das Verlaufs der Stromstärke und/oder der Spannung des an der Wirbelstrombremse angelegten Stroms geeignet von der Steuereinrichtung eingestellt werden, um die zu jeweilige Drehschwingung zu dämpfen.

Vorzugsweise ist die Detektionseinrichtung dazu hergerichtet die Nenndrehzahl der Antriebswelle zu bestimmen und aus der Nenndrehzahl der Antriebswelle eine von der Steuereinrichtung zu dämpfende Motorordnung zu berechnen. Die Nenndrehzahl der Antriebswelle ist besonders einfach zu detektieren und kann sich beispielsweise aus einem für den Verbrennungsmotor hinterlegten Kennlinienfeld ohne direkte Messung an der Antriebswelle ergeben. Da die zu erwartenden Drehschwingungen insbesondere den Motorordnungen entsprechen, kann aus der bekannten Nenndrehzahl leicht auf die Frequenz der zu dämpfenden Drehschwingung gefolgert werden. Die Steuereinrichtung kann dadurch besonders schnell auf eine Änderung der Nenndrehzahl reagieren und vorausschauend sich ändernde Drehschwingungen beim Dämpfen berücksichtigen.

Besonders bevorzugt oszilliert der Betrag des von der Steuereinrichtung gesteuerte Stroms mit einer Dämpfungsfrequenz, wobei die Dämpfungsfrequenz einer Frequenz der zu dämpfenden Drehschwingung, insbesondere Motorordnung, entspricht, wobei die Dämpfungsfrequenz zur Frequenz der zu dämpfenden Drehschwingung um eine Phasenverschiebung Δϕ phasenverschoben ist, wobei insbesondere Δϕ = 180° ± 30°, vorzugsweise Δϕ = 180° ± 15° und besonders bevorzugt Δϕ = 180° ± 5° gilt. Dadurch kann in der Beschleunigungsphase der Drehschwingung ein verzögerndes Moment und in einer Verzögerungsphase der Drehschwingung ein beschleunigendes Moment über die mit Hilfe der Wirbelstrombremse beeinflussten Reibungskupplung eingeleitet werden, um die Drehschwingungen zu dämpfen.

Insbesondere ist die Antriebswelle über einen Freilauf mit der Betätigungsrichtung verbunden, wobei der Freilauf bei einem Überholen der Antriebswelle in Zugrichtung sperrt und bei einem Überholen der Betätigungseinrichtung frei läuft, wobei die Wirbelstrombremse über einen an dem Freilauf vorbei verlaufenden Kraftfluss an der Betätigungseinrichtung angreift. Die Wirbelstrombremse kann den Freilauf überbrücken, insbesondere um zum Starten des Verbrennungsmotors ein Drehmoment von dem Antriebsstrang, insbesondere von einer elektrischen Maschine, in den Verbrennungsmotor einzuleiten. Zudem kann das Moment zum Schließen der Reibungskupplung mit Hilfe der Betätigungseinrichtung von dem Verbrennungsmotor selbst eingeleitet werden, so dass es nach einem Start des Verbrennungsmotors nicht erforderlich ist ein permanentes Schließmoment von der Wirbelstrombremse einzuleiten. Die Steuereinrichtung kann dadurch die Wirbelstrombremse entsprechend flexibel über einen entsprechend großen Betriebsbereich steuern.

Vorzugsweise ist die Wirbelstrombremse mit einem Rotor einer elektrischen Maschine zum Antreiben des Kraftfahrzeugs gekoppelt. Die Wirbelstrombremse kann dadurch mit der elektrischen Maschine zum Austausch elektrischer Energie gekoppelt sein. Ein Moment zum Betätigen der Reibungskupplung mit Hilfe der Wirbelstrombremse kann dadurch der elektrischen Maschine entnommen werden. Die Wirbelstrombremse kann beispielsweise mit einem Strom beaufschlagt werden, um ein elektromagnetisches Feld zu erzeugen, das mit einem Permanentmagneten des Rotors der elektrischen Maschine zusammenwirkt, so dass über die Wirbelstrombremse ein Drehmoment aus der elektrischen Maschine abgeleitet werden kann.

Besonders bevorzugt ist die Ausgangswelle mit einem Drehschwingungsdämpfer, insbesondere ein Zweimassenschwungrad, verbunden. Der Drehschwingungsdämpfer ist insbesondere zur Dämpfung von Drehschwingungen ausgestaltet, die von den mit Hilfe der Wirbelstrombremse gedämpften Drehschwingungen verschieden sind. Dadurch lässt sich ein entsprechend größerer Frequenzbereich von Drehschwingungen dämpfen. Ferner kann durch die Dämpfung mit Hilfe der Wirbelstrombremse und der entsprechende oszillierend betätigten Reibungskupplung bereits ein Dämpfungsausmaß erreicht werden, indem beispielsweise die Amplituden der Drehschwingungen signifikant reduziert wurden, dass der im Drehmomentfluss im Zugbetrieb des Verbrennungsmotors nachgelagerte und/oder vorgelagert Drehschwingungsdämpfer entsprechend einfacher aufgebaut sein kann.

Die Erfindung betrifft ferner ein Verfahren zum Dämpfen von Drehschwingungen in einem Antriebsstrang eines Kraftfahrzeugs, bei dem ein Kupplungsaggregat, das insbesondere wie vorstehend beschrieben aus- und weitergebildet sein kann, zum Koppeln eines Verbrennungsmotors an den Antriebsstrang des Kraftfahrzeugs vorgesehen ist, wobei das Kupplungsaggregat eine mit Hilfe einer Wirbelstrombremse betätigbare Reibungskupplung zum Koppeln einer Antriebswelle des Verbrennungsmotors mit einer Ausgangswelle aufweist, in einer Verzögerungsphase einer Drehschwingung der Antriebswelle die Wirbelstrombremse die Reibungskupplung drehfest schließt und in einer Beschleunigungsphase der Drehschwingung der Antriebswelle die Wirbelstrombremse die Reibungskupplung öffnet und/oder im Schlupfbetrieb betreibt. Das Verfahren kann insbesondere wie vorstehend anhand des Kupplungsaggregats erläutert aus- und weitergebildet sein. Durch die Änderung des Betriebszustands der Reibungskupplung mit Hilfe der Wirbelstrombremse sind nur geringe träge Massen der Betätigungseinrichtung mit einem entsprechend geringen Energieeinsatz zu bewegen, um eine aktive Dämpfung von Drehschwingungen zu erreichen, so dass eine zumindest teilweise Dämpfung von Drehschwindungen in einem Antriebsstrang eines Kraftfahrzeugs energieeffizient ermöglicht ist.

Insbesondere wird eine Frequenz der Drehschwingung der Antriebswelle bestimmt und die Wirbelstrombremse mit einer der Frequenz der Drehschwingung entsprechenden Dämpfungsfrequenz bestromt, wobei die Dämpfungsfrequenz zur Frequenz der zu dämpfenden Drehschwingung um eine Phasenverschiebung Δϕ phasenverschoben ist, wobei insbesondere Δϕ = 180° ± 30°, vorzugsweise Δϕ = 180° ± 15° und besonders bevorzugt Δϕ = 180° ± 5° gilt. Dadurch kann in der Beschleunigungsphase der Drehschwingung ein verzögerndes Moment und in einer Verzögerungsphase der Drehschwingung ein beschleunigendes Moment über die mit Hilfe der Wirbelstrombremse beeinflussten Reibungskupplung eingeleitet werden, um die Drehschwingungen zu dämpfen.

Vorzugsweise ist die zu dämpfende Drehschwingung der Antriebswelle eine Motorordnung des Verbrennungsmotors, wobei die Motorordnung insbesondere aus einer Nenndrehzahl des Verbrennungsmotors bestimmt wird. Die Nenndrehzahl der Antriebswelle ist besonders einfach zu detektieren und kann sich beispielsweise aus einem für den Verbrennungsmotor hinterlegten Kennlinienfeld ohne direkte Messung an der Antriebswelle ergeben. Da die zu erwartenden Drehschwingungen insbesondere den Motorordnungen entsprechen, kann aus der bekannten Nenndrehzahl leicht auf die Frequenz der zu dämpfenden Drehschwingung gefolgert werden. Dadurch kann besonders schnell auf eine Änderung der Nenndrehzahl reagiert werden und es können vorausschauend sich ändernde Drehschwingungen beim Dämpfen berücksichtigt werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische perspektivische Schnittansicht eines Kupplungsaggregats,
Fig. 2: eine perspektivische Ansicht einer Wirbelstrombremse für das Kupplungsaggregat aus Fig. 1,
Fig. 3: eine schematische perspektivische Schnittansicht der Wirbelstrombremse aus Fig. 2 und
Fig. 4: ein schematisches Diagramm über den zeitlichen Verlauf von in dem Kupplungsaggregat aus Fig.1 auftretenden Drehmomenten.

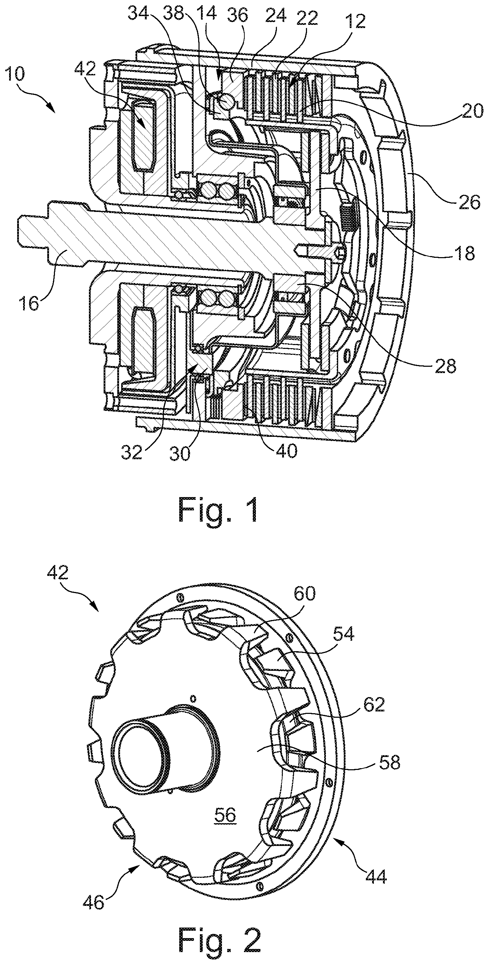

Das in Fig. 1 dargestellte Kupplungsaggregat 10 ist als Rotor einer hier ansonsten nicht näher dargestellten elektrischen Maschine eines Hybrid-Fahrzeugs ausgestaltet und weist eine integrierte als Lamellenkupplung ausgestaltete Reibungskupplung 12 auf, die mit Hilfe einer Betätigungseinrichtung 14 betätigt werden kann. Das Kupplungsaggregat 10 weist eine Antriebswelle 16 eines Verbrennungsmotors auf, über die ein in dem Verbrennungsmotor erzeugtes Drehmoment in das Kupplungsaggregat eingeleitet werden kann. Mit der Antriebswelle 16 ist ein Innenlamellenträger 18 der Reibungskupplung 12 drehfest verbunden. Der Innenlamellenträger 18 weist Innenlamellen 20 auf, die mit Außenlamellen 22 eines Außenlamellenträgers 24 reibschlüssig verpresst werden können, um ein Drehmoment zu übertragen. Der Außenlamellenträger 24 ist einstückig mit einer als Hohlwelle ausgestalteten Ausgangswelle 26 ausgestaltet. Die Ausgangswelle 26 kann beispielsweise über eine Kupplung mit einer Getriebeeingangswelle eines Kraftfahrzeuggetriebes gekoppelt werden.

Die Antriebswelle 16 ist zusätzlich über einen Freilauf 28 und einem Planetenrad 30 eines Planetengetriebes 32 mit einer Eingangsrampe 34 der Betätigungseinrichtung 14 gekoppelt. Die Eingangsrampe 34 kann relativ zu einer drehfest an dem Außenlamellenträger 24 axial verschiebbaren Ausgangsrampe 36 verdreht werden, an der sich die Eingangsrampe 34 über Lagerkugeln 38 abstützt. Zum Schließen der Reibungskupplung 12 kann die Eingangsrampe 34 relativ zur Ausgangsrampe 36 derart verdreht werden, dass sich die Gesamterstreckung des aus der Eingangsrampe 34 und der Ausgangsrampe 36 gebildeten Rampensystems in axialer Richtung erhöht und eine von der Eingangsrampe 34 wegweisende Rückseite 40 der Ausgangsrampe 36 auf die Reibungskupplung 12 zu verlagert wird. Die Rückseite 40 kann hierbei bereits eine Anpressplatte der Reibungskupplung 12 ausbilden. Der Freilauf 28 sperrt, wenn die Antriebswelle 16 überholt, so dass das von der Antriebswelle 16 eingeleitete Drehmoment auch zum Schließen der Reibungskupplung 12 genutzt werden kann. Wenn die Antriebswelle 16 von dem Verbrennungsmotor nicht angetrieben wird, weil der Verbrennungsmotor beispielsweise ausgeschaltet ist, befindet sich der Freilauf 28 in der Freilaufstellung, so dass das Schleppmoment des Verbrennungsmotors von dem Antriebsstrang abgekoppelt ist.

Insbesondere wenn eine elektrische Maschine die Ausgangswelle 26 antreibt, kann das Drehmoment der elektrischen Maschine genutzt werden, um den Verbrennungsmotor zu starten. Hierzu kann mit Hilfe einer Wirbelstrombremse 42 ein Teil des Drehmoments der elektrischen Maschine abgezweigt werden und über das Planetengetriebe 32 unter Überbrückung des Freilaufs 28 an die Eingangsrampe 34 der Betätigungseinrichtung 14 geleitet werden, um die Reibungskupplung 12 zu schließen. Im geschlossenen Zustand der Reibungskupplung 12 kann ein Drehmoment des Antriebsstrangs, das insbesondere von der elektrischen Maschine erzeugt wird, in die Antriebswelle 16 eingeleitet werden, um den Verbrennungsmotor zu starten.

Wenn der Verbrennungsmotor gestartet ist, wird über die Antriebswelle 16 ein Drehmoment in das Kupplungsaggregat 10 eingeleitet, das mit Drehschwingungen in der Frequenz der Motorordnungen behaftet ist. Diese Drehschwingungen können mit Hilfe einer den Strom der Wirbelstrombremse 42 steuernden Steuereinrichtung gedämpft werden. Hierzu kann der Strom der Wirbelstrombremse 42 mit der Frequenz der Drehschwingungen phasenversetzt oszillieren, so dass durch ein zumindest teilweises Öffnen der Reibungskupplung, insbesondere in einen Schlupfbetrieb, und einem vollständigen Schließen der Reibungskupplung den Drehschwingungen entgegengewirkt werden kann.

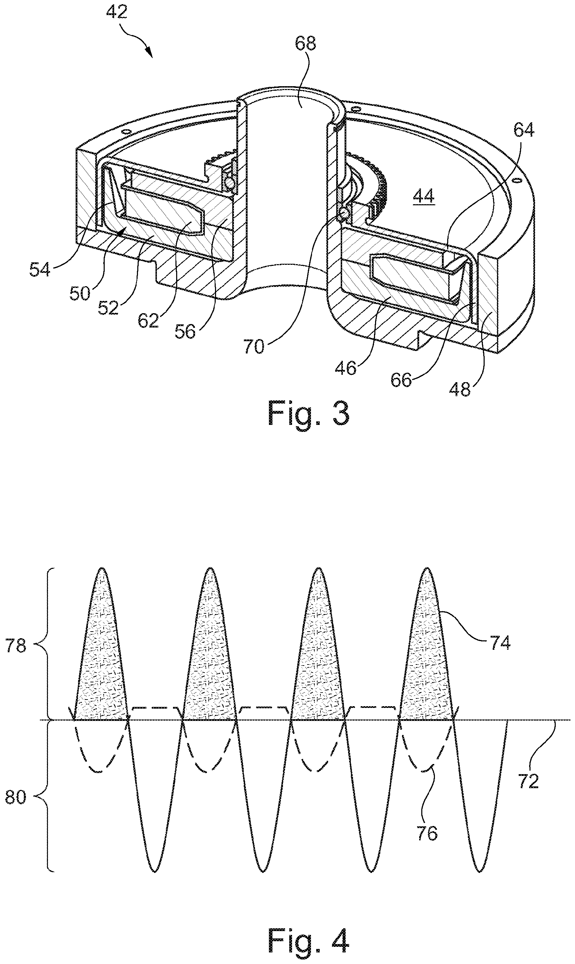

Die in Fig. 2 und Fig. 3 dargestellte Wirbelstrombremse 42 weist einen Bremsenstator und einen Bremsenrotor 44 auf. Der Bremsenstator weist einen Innenstator 46 und einen Außenstator 48 auf. Der Innenstator 46 weist einen ersten Klauenpol 50 mit einem ersten Scheibenabschnitt 52 und ersten Polklauen 54 auf. Der Innenstator 36 weist einen zweiten Klauenpol 56 mit einem zweiten Scheibenabschnitt 58 und zweiten Polklauen 60 auf. Der Innenstator 46 weist eine Zentralspule 62 auf. Die ersten Polklauen 54 des ersten Klauenpols 54 sind an dem ersten Scheibenabschnitt 52 radial außenseitig angeordnet. Die ersten Polklauen 54 des ersten Klauenpols 54 sind jeweils zu dem ersten Scheibenabschnitt 52 in etwa 90° gewinkelt und weisen jeweils ein freies schmal zulaufendes Ende auf. Die ersten Polklauen 54 des ersten Klauenpols 54 sind an dem ersten Scheibenabschnitt 52 in Umfangsrichtung verteilt angeordnet. Zwischen den ersten Polklauen 54 des ersten Klauenpols 54 sind Lücken gebildet. Die zweiten Polklauen 60 des zweiten Klauenpols 56 sind an dem zweiten Scheibenabschnitt 58 radial außenseitig angeordnet. Die zweiten Polklauen 60 des zweiten Klauenpols 56 sind jeweils zu dem zweiten Scheibenabschnitt 58 in etwa 90° gewinkelt und weisen jeweils ein freies schmal zulaufendes Ende auf. Die zweiten Polklauen 60 des zweiten Klauenpols 56 sind an dem zweiten Scheibenabschnitt 58 in Umfangsrichtung verteilt angeordnet. Zwischen den zweiten Polklauen 60 des zweiten Klauenpols 56 sind Lücken gebildet. Der erste Klauenpol 50 mit seinem ersten Scheibenabschnitt 52 und der zweite Klauenpol 56 mit seinem zweiten Scheibenabschnitt 58 sind beidseits der Zentralspule 62 angeordnet. Die ersten Polklauen 54 des ersten Klauenpols 50 und die zweiten Polklauen 60 des zweiten Klauenpols 56 umgreifen die Zentralspule 62 radial außenseitig. Die freien Enden der ersten Polklauen 54 des ersten Klauenpols 56 und die freien Enden der zweiten Polklauen 60 des zweiten Klauenpols 56 sind einander entgegen gerichtet. Die ersten Polklauen 54 des ersten Klauenpols 50 und die zweiten Polklauen 60 des zweiten Klauenpols 56 greifen wechselnd ineinander. Der erste Klauenpol 50 und der zweite Klauenpol 56 umgreifen die Zentralspule 62 radial innenseitig.

Der Bremsenrotor 44 weist eine topfartige Form mit einem Bodenabschnitt 64 und einem Wandabschnitt 66 auf. Der Bremsenrotor 44 ist mit seinem Bodenabschnitt 64 an dem zweiten Klauenpol 56 und mit seinem Wandabschnitt 66 radial außenseitig des Innenstators 44 angeordnet. Der Außenstator 306 ist spulenlos ausgeführt und weist eine dünne, flachringartige Form auf. Der Außenstator 306 ist magnetisch permeabel. Der Außenstator 306 ist radial außenseitig des Bremsenrotors 302 angeordnet. Der Innenstator 46 und der Außenstator 48 sind mit einem Trägerteil 68 fest verbunden. Das Trägerteil 68 weist einen Flanschabschnitt und einen Nabenabschnitt auf. Das Trägerteil 68 und der Außenstator 48 bilden eine gehäuseartige Aufnahme für den Innenstator 46 und den Bremsenrotor 44. Der erste Klauenpol 50 ist an dem Flanschabschnitt des Trägerteils 68 angeordnet. Der Nabenabschnitt des Trägerteils 68 ragt durch eine zentrale Ausnehmung des Innenstators 46 hindurch. Der Bremsenrotor 44 ist mithilfe eines Lagers 70 drehbar an dem Nabenabschnitt des Trägerteils 68 gelagert.

Wie in Fig. 4 dargestellt kann bei einer im Wesentlichen konstanten Nenndrehzahl 72 der Antriebswelle 16 das Drehmoment 74 beziehungsweise die damit korrespondierende Drehzahl schwanken, wobei der zeitliche Verlauf des Drehmoments 74 im Wesentlichen sinusförmig sein kann und einer Motorordnung des Verbrennungsmotors entsprechen kann. Durch eine gegenläufige oszillierende Betätigung der Reibungskupplung 12 durch eine entsprechende Bestromung der Wirbelstrombremse 42 kann ein Gegenmoment 76 erzeugt werden, das die Drehschwingung im Drehmoment 72 zumindest teilweise dämpfen kann. Die Reibungskupplung 12 kann hierbei oszillierend zwischen einem Schlupfbetrieb in einer Beschleunigungsphase 78 und einem vollständig geschlossenem Zustand 80 in einer Verzögerungsphase 80 wechseln. In der Beschleunigungsphase 78 hat die Drehschwingung das Bestreben die Nenndrehzahl zu erhöhen, während in der Verzögerungsphase 80 die Drehschwingung das Bestreben die Nenndrehzahl zu verringern.

### Bezugszeichenliste

- 10: Kupplungsaggregat
- 12: Reibungskupplung
- 14: Betätigungseinrichtung
- 16: Antriebswelle
- 18: Innenlamellenträger
- 20: Innenlamellen
- 22: Außenlamellen
- 24: Außenlamellenträger
- 26: Ausgangswelle
- 28: Freilauf
- 30: Planetenrad
- 32: Planetengetriebe
- 34: Eingangsrampe
- 36: Ausgangsrampe
- 38: Lagerkugel
- 40: Rückseite
- 42: Wirbelstrombremse
- 44: Bremsenrotor
- 46: Innenstator
- 48: Außenstator
- 50: erster Klauenpol
- 52: erster Scheibenabschnitt
- 54: erste Polklaue
- 56: zweiter Klauenpol
- 58: zweiter Scheibenabschnitt
- 60: zweite Polklaue
- 62: Zentralspule
- 64: Bodenabschnitt
- 66: Wandabschnitt
- 68: Trägerteil
- 70: Lager
- 72: Nenndrehzahl
- 74: Drehmoment
- 76: Gegenmoment
- 78: Beschleunigungsphase
- 80: Verzögerungsphase

## Patentansprüche

1. Kupplungsaggregat zum Koppeln eines Verbrennungsmotors an einen Antriebsstrang eines Kraftfahrzeugs, mit
einer Reibungskupplung (12) zum Koppeln einer Antriebswelle (16) des Verbrennungsmotors mit einer Ausgangswelle (26),
einer Betätigungseinrichtung (14) zum Öffnen und/oder Schließen der Reibungskupplung (12),
einer Wirbelstrombremse (42) zum Einleiten einer Betätigungskraft in die Betätigungseinrichtung (14) und
einer Steuereinrichtung zum Bestromen der Wirbelstrombremse (42) mit einem definiert vorgegebenen Strom,
**dadurch gekennzeichnet, dass**
die Steuereinrichtung hergerichtet ist in einer Beschleunigungsphase (78) einer Drehschwingung der Antriebswelle (16) einen Strom zum Öffnen, insbesondere zum Einstellen eines Schlupfbetriebs, der Reibungskupplung (12) und in einer Verzögerungsphase (80) der Drehschwingung der Antriebswelle (16) einen Strom zum Schließen, insbesondere zum drehfesten reibschlüssigen Koppeln, der Reibungskupplung (12) für die Wirbelstrombremse (42) vorzugeben.

2. Kupplungsaggregat nach Anspruch 1, **dadurch gekennzeichnet, dass** eine mit der Steuereinrichtung gekoppelte Detektionseinrichtung zur Detektion von Drehschwingungen der Antriebswelle (16) vorgesehen ist.

3. Kupplungsaggregat nach Anspruch 2, **dadurch gekennzeichnet, dass** die Detektionseinrichtung dazu hergerichtet ist die Nenndrehzahl (72) der Antriebswelle (16) zu bestimmen und aus der Nenndrehzahl (72) der Antriebswelle (16) eine von der Steuereinrichtung zu dämpfende Motorordnung zu berechnen.

4. Kupplungsaggregat nach einem der Ansprüche 1 bis 3, **dadurch gekennzeichnet, dass** der Betrag des von der Steuereinrichtung gesteuerte Stroms mit einer Dämpfungsfrequenz oszilliert, wobei die Dämpfungsfrequenz einer Frequenz der zu dämpfenden Drehschwingung, insbesondere Motorordnung, entspricht, wobei die Dämpfungsfrequenz zur Frequenz der zu dämpfenden Drehschwingung um eine Phasenverschiebung Δϕ phasenverschoben ist, wobei insbesondere Δϕ = 180° ± 30°, vorzugsweise Δϕ = 180° ± 15° und besonders bevorzugt Δϕ = 180° ± 5° gilt.

5. Kupplungsaggregat nach einem der Ansprüche 1 bis 4, **dadurch gekennzeichnet, dass** die Antriebswelle (16) über einen Freilauf (28) mit der Betätigungsrichtung (14) verbunden ist, wobei der Freilauf (28) bei einem Überholen der Antriebswelle (16) in Zugrichtung sperrt und bei einem Überholen der Betätigungseinrichtung (14) frei läuft, wobei die Wirbelstrombremse (42) über einen an dem Freilauf (28) vorbei verlaufenden Kraftfluss an der Betätigungseinrichtung (14) angreift.

6. Kupplungsaggregat nach einem der Ansprüche 1 bis 5, **dadurch gekennzeichnet, dass** die Wirbelstrombremse (42) mit einem Rotor einer elektrischen Maschine zum Antreiben des Kraftfahrzeugs gekoppelt ist.

7. Kupplungsaggregat nach einem der Ansprüche 1 bis 6, **dadurch gekennzeichnet, dass** die Ausgangswelle (26) mit einem Drehschwingungsdämpfer, insbesondere ein Zweimassenschwungrad, verbunden ist.

8. Verfahren zum Dämpfen von Drehschwingungen in einem Antriebsstrang eines Kraftfahrzeugs, bei dem
ein Kupplungsaggregat (10), insbesondere nach einem der Ansprüche 1 bis 7, zum Koppeln eines Verbrennungsmotors an den Antriebsstrang des Kraftfahrzeugs vorgesehen ist, wobei das Kupplungsaggregat (10) eine mit Hilfe einer Wirbelstrombremse (42) betätigbare Reibungskupplung (12) zum Koppeln einer Antriebswelle (16) des Verbrennungsmotors mit einer Ausgangswelle (26) aufweist,
**dadurch gekennzeichnet, dass**
in einer Verzögerungsphase (80) einer Drehschwingung der Antriebswelle (16) die Wirbelstrombremse (42) die Reibungskupplung (12) drehfest schließt und
in einer Beschleunigungsphase (78) der Drehschwingung der Antriebswelle (16) die Wirbelstrombremse (42) die Reibungskupplung (12) öffnet und/oder im Schlupfbetrieb betreibt.

9. Verfahren nach Anspruch 8, bei dem eine Frequenz der Drehschwingung der Antriebswelle (16) bestimmt wird und die Wirbelstrombremse (42) mit einer der Frequenz der Drehschwingung entsprechenden Dämpfungsfrequenz bestromt wird, wobei die Dämpfungsfrequenz zur Frequenz der zu dämpfenden Drehschwingung um eine Phasenverschiebung Δϕ phasenverschoben ist, wobei insbesondere Δϕ = 180° ± 30°, vorzugsweise Δϕ = 180° ± 15° und besonders bevorzugt Δϕ = 180° ± 5° gilt.

10. Verfahren nach Anspruch 8 oder 9, bei dem die zu dämpfende Drehschwingung der Antriebswelle (16) eine Motorordnung des Verbrennungsmotors ist, wobei die Motorordnung insbesondere aus einer Nenndrehzahl (72) des Verbrennungsmotors bestimmt wird.

## Claims

1. Clutch assembly for coupling an internal combustion engine to a drive train of a motor vehicle, having
a friction clutch (12) for coupling a drive shaft (16) of the internal combustion engine to an output shaft (26),
an actuating device (14) for opening and/or closing the friction clutch (12),
an eddy current brake (42) for introducing an actuating force into the actuating device (14), and
a control device for energizing the eddy current brake (42) with a current which is predetermined in a defined manner,
**characterized in that**
the control device is set up to specify, for the eddy current brake (42), a current for opening, in particular for setting a slipping operation of the friction clutch (12) in an acceleration phase (78) of a torsional vibration of the drive shaft (16), and to specify a current for closing, in particular for coupling the friction clutch (12) in a rotationally fixed and frictionally locking manner in a deceleration phase (80) of the torsional vibration of the drive shaft (16) .

2. Clutch assembly according to Claim 1, **characterized in that** a detection device which is coupled to the control device is provided for detecting torsional vibrations of the drive shaft (16).

3. Clutch assembly according to Claim 2, **characterized in that** the detection device is set up to determine the nominal rotational speed (72) of the drive shaft (16) and to calculate an engine order to be damped by the control device from the nominal rotational speed (72) of the drive shaft (16).

4. Clutch assembly according to one of Claims 1 to 3, **characterized in that** the magnitude of the current which is controlled by the control device oscillates at a damping frequency, the damping frequency corresponding to a frequency of the torsional vibration to be damped, in particular the engine order, the damping frequency being phase shifted with respect to the frequency of the torsional vibration to be damped by a phase shift Δϕ, where, in particular, Δϕ = 180° ±30°, preferably Δϕ = 180° ±15°, and particularly preferably Δϕ = 180° ±5°.

5. Clutch assembly according to one of Claims 1 to 4, **characterized in that** the drive shaft (16) is connected via a freewheel (28) to the actuating device (14), the freewheel (28) locking in the pulling direction in the case of overrunning of the drive shaft (16) and running freely in the case of overrunning of the actuating device (14), the eddy current brake (42) acting on the actuating device (14) via a force flow which runs past the freewheel (28).

6. Clutch assembly according to one of Claims 1 to 5, **characterized in that** the eddy current brake (42) is coupled to a rotor of an electric machine for driving the motor vehicle.

7. Clutch assembly according to one of Claims 1 to 6, **characterized in that** the output shaft (26) is connected to a torsional vibration damper, in particular a dual-mass flywheel.

8. Method for damping torsional vibrations in a drive train of a motor vehicle, in which method a clutch assembly (10), in particular according to one of Claims 1 to 7, is provided for coupling an internal combustion engine to the drive train of the motor vehicle, the clutch assembly (10) having a friction clutch (12) which can be actuated with the aid of an eddy current brake (42) in order to couple a drive shaft (16) of the internal combustion engine to an output shaft (26), **characterized in that**, in a deceleration phase (80) of a torsional vibration of the drive shaft (16), the eddy current brake (42) closes the friction clutch (12) in a rotationally fixed manner, and, in an acceleration phase (78) of the torsional vibration of the drive shaft (16), the eddy current brake (42) opens the friction clutch (12) and/or operates it in a slipping operation.

9. Method according to Claim 8, in which a frequency of the torsional vibration of the drive shaft (16) is determined, and the eddy current brake (42) is energized at a damping frequency which corresponds to the frequency of the torsional vibration, the damping frequency being phase shifted with respect to the torsional vibration to be damped by a phase shift Δϕ, where, in particular, Δϕ = 180° ±30°, preferably Δϕ = 180° ±15°, and particularly preferably Δϕ = 180° ±5°.

10. Method according to Claim 8 or 9, in which the torsional vibration to be damped of the drive shaft (16) is an engine order of the internal combustion engine, the engine order being determined, in particular, from a nominal rotational speed (72) of the internal combustion engine.

## Revendications

1. Organe d'embrayage destiné à accoupler un moteur à combustion interne à une chaîne cinématique d'un véhicule automobile, comprenant
un embrayage à friction (12) pour accoupler un arbre d'entraînement (16) du moteur à combustion interne à un arbre de sortie (26),
un dispositif d'actionnement (14) pour ouvrir et/ou fermer l'embrayage à friction (12),
un frein à courants de Foucault (42) pour introduire une force d'actionnement dans le dispositif d'actionnement (14) et
un dispositif de commande pour alimenter en courant le frein à courants de Foucault (42) avec un courant prédéfini de manière définie, **caractérisé en ce que**
le dispositif de commande est prévu, dans une phase d'accélération (78) d'une oscillation de torsion de l'arbre d'entraînement (16), pour prédéfinir un courant, pour l'ouverture, en particulier pour l'établissement d'un mode de glissement, de l'embrayage à friction (12), et dans une phase de décélération (80) de l'oscillation de torsion de l'arbre d'entraînement (16), pour prédéfinir un courant, pour la coupure, en particulier pour l'accouplement par engagement par friction de manière solidaire en rotation, de l'embrayage à friction (12) pour le frein à courants de Foucault (42).

2. Organe d'embrayage selon la revendication 1, **caractérisé en ce qu'**un dispositif de détection accouplé au dispositif de commande est prévu pour détecter des oscillations de torsion de l'arbre d'entraînement (16).

3. Organe d'embrayage selon la revendication 2, **caractérisé en ce que** le dispositif de détection est prévu pour déterminer la vitesse de rotation nominale (72) de l'arbre d'entraînement (16) et, à partir de la vitesse de rotation nominale (72) de l'arbre d'entraînement (16), pour calculer l'ordre du moteur à amortir par le dispositif de commande.

4. Organe d'embrayage selon l'une quelconque des revendications 1 à 3, **caractérisé en ce que** la valeur du courant commandé par le dispositif de commande oscille avec une fréquence d'amortissement, la fréquence d'amortissement correspondant à une fréquence de l'oscillation de torsion à amortir, en particulier de l'ordre du moteur, la fréquence d'amortissement étant déphasée par rapport à la fréquence de l'oscillation de torsion à amortir d'un déphasage Δϕ, étant donné notamment que Δϕ = 180° ± 30°, de préférence Δϕ = 180° ± 15°, et particulièrement préférablement Δϕ = 180° ± 5°.

5. Organe d'embrayage selon l'une quelconque des revendications 1 à 4, **caractérisé en ce que** l'arbre d'entraînement (16) est connecté par le biais d'une roue libre (28) au dispositif d'actionnement (14), la roue libre (28), en cas de dépassement de l'arbre d'entraînement (16), se bloquant dans la direction de traction et en cas de dépassement du dispositif d'actionnement (14), tournant librement, le frein à courants de Foucault (42) s'engageant avec le dispositif d'actionnement (14) par le biais d'un flux de forces passant devant la roue libre (28).

6. Organe d'embrayage selon l'une quelconque des revendications 1 à 5, **caractérisé en ce que** le frein à courants de Foucault (42) est accouplé à un rotor d'une machine électrique pour l'entraînement du véhicule automobile.

7. Organe d'embrayage selon l'une quelconque des revendications 1 à 6, **caractérisé en ce que** l'arbre de sortie (26) est connecté à un amortisseur d'oscillations de torsion, en particulier un volant d'inertie à deux masses.

8. Procédé pour amortir des oscillations de torsion dans une chaîne cinématique d'un véhicule automobile, dans lequel un organe d'embrayage (10), en particulier selon l'une quelconque des revendications 1 à 7, est prévu pour l'accouplement d'un moteur à combustion interne à la chaîne cinématique du véhicule automobile, l'organe d'embrayage (10) présentant un embrayage à friction (12) pouvant être actionné à l'aide d'un frein à courants de Foucault (42) pour l'accouplement d'un arbre d'entraînement (16) du moteur à combustion interne à un arbre de sortie (26),
**caractérisé en ce que**
dans une phase de décélération (80) d'une oscillation de torsion de l'arbre d'entraînement (16), le frein à courants de Foucault (42) ferme de manière solidaire en rotation l'embrayage à friction (12) et
dans une phase d'accélération (78) de l'oscillation de torsion de l'arbre d'entraînement (16), le frein à courants de Foucault (42) ouvre et/ou entraîne en mode de glissement l'embrayage à friction (12).

9. Procédé selon la revendication 8, dans lequel une fréquence de l'oscillation de torsion de l'arbre d'entraînement (16) est déterminée et le frein à courants de Foucault (42) est alimenté en courant avec une fréquence d'amortissement correspondant à la fréquence de l'oscillation de torsion, la fréquence d'amortissement étant déphasée par rapport à la fréquence de l'oscillation de torsion à amortir d'un déphasage Δϕ, étant donné notamment que Δϕ = 180° ± 30°, de préférence Δϕ = 180° ± 15°, et particulièrement préférablement Δϕ = 180° ± 5°_{.}

10. Procédé selon la revendication 8 ou 9, dans lequel l'oscillation de torsion à amortir de l'arbre d'entraînement (16) est un ordre du moteur à combustion interne, l'ordre du moteur étant déterminé notamment à partir d'un régime nominal (72) du moteur à combustion interne.
